# EUROPÄISCHE PATENTANMELDUNG

(11) **EP 1 870 891 A1**
(43) Veröffentlichungstag der Anmeldung: **26.12.2007**
(21) Anmeldenummer: 06115842.4
(22) Anmeldetag: 21.06.2006
(51) Int. Cl.: G11B 20/00, G11B 7/24, G11B 23/28, G11B 23/38, G11B 23/40

(54) **Beschriftung von optischen Datenträgern**

(71) Anmelder: Adcom Production AG, 8962 Bergdietikon (CH)
(72) Erfinder: Zanini, Franco, 5704 Egliswil (CH)
(74) Vertreter: Kihn, Pierre Emile Joseph

(57) **Zusammenfassung**

Verfahren zur Beschriftung eines optischen Datenträgers mit mindestens einem Datenbereich, das folgende Schritte umfasst: Einfügen innerhalb des mindestens einen Datenbereichs mindestens eines Teilbereichs der keine Daten enthält und von Standard-Lesegeräten ignoriert wird, Einbringen innerhalb dieses mindestens einen Teilbereichs von durch einen Benutzer des Datenträgers visuell erkennbaren Informationen; sowie beschriftete optische Datenträger.

## Beschreibung

### Technisches Gebiet

Die vorliegende Erfindung betrifft allgemein die Beschriftung von optischen Medien oder Datenträgern, wie z.b. CDs, DVDs, usw. Sie betrifft insbesondere ein Verfahren zur Beschriftung von solchen Medien, sowie die beschrifteten Medien selbst.

### Stand der Technik

Optische Datenträger, wie z.b. CDs (compact discs) und DVDs (digital versatile discs, bzw. digital video discs) erfreuen sich großer Beliebtheit und werden dazu benutzt digitale Informationen, wie Multimedia oder andere Daten zu speichern und zu transportieren.

Es gibt viele verschiedene Formate für optische Medien die grundsätzlich in zwei Hauptgruppen unterteilt werden können: einerseits nur lesbare (read only) Formate, wie CD-DA (digital audio compact disc), CD-ROM (CD read only memory) oder DVD-ROM (DVD read only memory), usw.; und andererseits einfach und mehrfach beschreibbare Medien, wie CD-R (CD recordable), CD-RW (CD rewritable), DVD-R (DVD recordable), DVD-RW (DVD rewritable), DVD-RAM (DVD random access memory).

Bei klassischen nur lesbaren optischen Medien werden Daten fest in einem lichtdurchlässigen Kunststoff, z.b. einer Polycarbonat-Scheibe, in Form extrem kleiner (nicht mit dem bloßen Auge erkennbaren) Vertiefungen abgebildet oder geprägt. Die Abfolge von Vertiefungen, sogenannter "Pits", und Erhebungen, sogenannter "Lands" ermöglicht so digitale Informationen zu speichern und diese per Laserabtastung in einem geeigneten Lesegerät immer wieder auszulesen.

Die Laserabtastung der "geprägten" Seite (Datenseite) wird durch Beschichtung der Daten-abgewandten Seite (Nicht-Datenseite) z.b. mit Aluminium ermöglicht, die eine reflektierende Schicht bildet. Diese Aluminiumbeschichtung wird anschließend üblicherweise auf der Nicht-Datenseite durch eine durchsichtige Lackschicht vor Umwelteinflüssen geschützt.

Mehrlagige, z.b. doppellagige (z.b. DVD-9) optische Datenträger entsprechen im Prinzip zwei (oder mehr) Einzeldatenträgern (mit jeweils einem Datenbereich) welche Datenseite auf Nicht-Datenseite aufeinander befestigt werden, wobei die Reflexionsschicht des unteren Einzeldatenträgers teilweise lichtdurchlässig ist (z.b. mittels feiner Silberbeschichtung).

Doppelseitige (eigentlich beidseitig lesbare) optische Datenträger, entsprechen im Prinzip zwei einzellagigen (z.b. DVD-10, insgesamt zwei Datenbereiche) oder mehrlagigen (z.b. DVD-18, insgesamt vier Datenbereiche) Einzeldatenträgern welche mit ihren Nicht-Datenseiten aufeinander geklebt werden.

Da sich aber für den Benutzer solche Medien in diesem Stadium der Herstellung nicht visuell voneinander unterscheiden lassen und sich die darauf befindlichen Daten nur maschinell per Laserlicht lesen lassen, wird bei einseitigen Medien auf die Lackschicht der Nicht-Datenseite eine Kennzeichnung wie z.b. Interpret und Titel, auf der Daten-abgewandten Seite, z.b. per Siebdruck, Trockenoffsetdruck, Thermotransferdruck, Tintenstrahldruck, Digitaldruck, o.ä., aufgebracht.

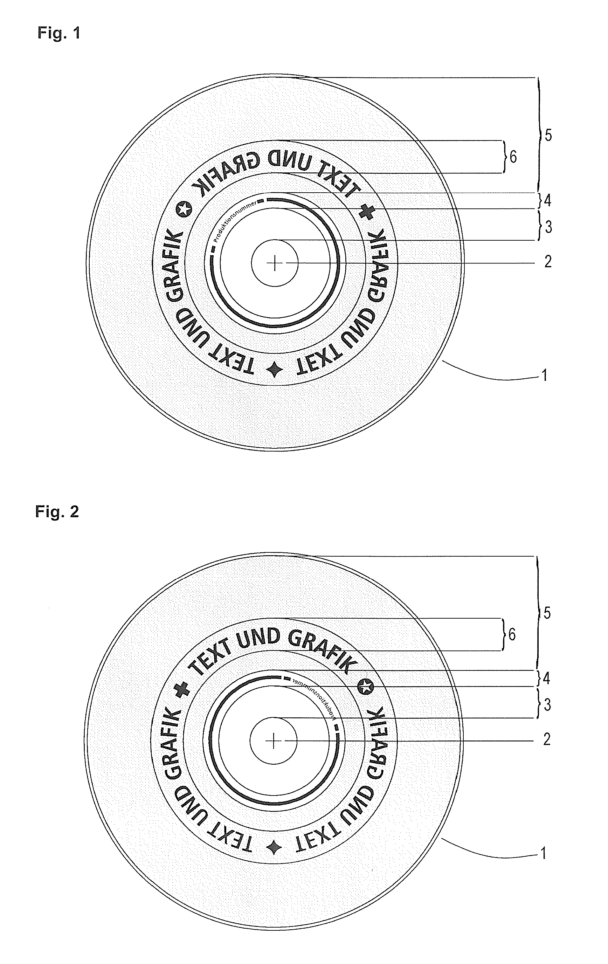

Bei doppelseitigen Medien ist dies spezifikationsbedingt nicht möglich, da in gewisser weise beide Nicht-Datenseiten für den Benutzer unsichtbar aneinander geklebt sind; es bleibt prinzipiell nur ein schmaler und kleinflächiger Ring (ca. 2 mm, siehe 3, Fig. 1 und 2) für die Beschriftung per Siebdruck, was in der Praxis natürlich unbefriedigend ist.

Außerdem hat die große Verbreitung der optischen Datenträger und der dafür notwendigen Lesegeräten dazu geführt, dass diese Medien sich teilweise sehr kostengünstig herstellen lassen und so z.b. für Geschenk- oder Werbeaktionen genutzt werden können.

So können z.b. CDs oder DVDs anderen Produkten zu Werbezwecken hinzu gelegt werden. Hierbei ergibt sich grundsätzlich ein Problem im Lebensmittelbereich dadurch, dass die Farben für die Bedruckung der Medien generell nicht lebensmittelverträglich sind, so dass bei Werbe- oder Geschenkbeilagen im Lebensmittelbereich weitere Maßnahmen getroffen werden müssen, damit die in den Farben enthaltenen Stoffe nicht mit den Lebensmitteln in Kontakt kommen. Diesbezüglich sind strikte Normen zu erfüllen, was andererseits die Kosten für solche Werbeaktionen natürlich nachteilig beeinflusst.

### Aufgabe der Erfindung

Eine Aufgabe der vorliegenden Erfindung ist es deshalb, ein Verfahren anzugeben welches es erlaubt optische Datenträger, wie z.b. CDs oder DVDs, zu beschriften ohne Farbstoffe oder ähnliches zu verwenden.

### Allgemeine Beschreibung der Erfindung

Diese Aufgabe wird erfindungsgemäß gelöst durch ein Verfahren zur Beschriftung eines optischen Datenträgers mit mindestens einem Datenbereich, das folgende Schritte umfasst:
Einfügen innerhalb des mindestens einen Datenbereichs mindestens eines Teilbereichs der keine Daten enthält und von Standard-Lesegeräten ignoriert wird,
Einbringen innerhalb dieses mindestens einen Teilbereichs von durch einen Benutzer des Datenträgers visuell erkennbaren Informationen.

Eine Beschriftung im Sinne dieser Erfindung ist die Kenntlichmachung eines Datenträgers die es dem Benutzer erlaubt Rückschlüsse auf den Inhalt des Mediums zu ziehen, bzw. dieses zu identifizieren. Der Ausdruck "visuell erkennbare Informationen" beschreibt in diesem Zusammenhang jegliche Angabe die zur Beschriftung oder Identifizierung taugt, wie z.b. Text und/oder Grafiken, als normales Bild und/oder als Spiegelbild.

Das erfindungsgemäße Verfahren erlaubt es optische Datenträger herzustellen die eindeutig vom Benutzer identifizierbar sind, ohne dass eine weitere Kenzeichnung in Form eines Drucks o.ä. notwendig wäre. Ein wesentlicher Vorteil der Erfindung ist folglich, dass das Verfahren ohne weiteren Beschriftungsschritt in Form eines Drucks, eines Etiketts, o.ä. auskommt, was einerseits die Herstellung solcher Medien vereinfacht und andererseits natürlich im obengeschilderten Falle von Lebensmittelverträglichkeit von großer Bedeutung ist.

Ein weiterer Vorteil des hier vorgestellten Verfahrens besteht darin, dass es eine detailliertere (sprich großflächigere) Beschriftung von doppelseitigen Medien (wie z.b. DVD-10 oder DVD-18) erlaubt, bei denen spezifikationsbedingt nur sehr wenig Platz für eine Beschriftung vorgesehen ist.

In der Praxis wird bei der Herstellung des sogenannten Glasmasters ein Teilbereich innerhalb des Datenbereichs eingefügt der keine von einem Standard-Lesegerät lesbaren Daten enthält, wobei ein Standard-Lesegerät ein Lesegerät für optische Datenträger ist welches die für den jeweiligen optischen Datenträger üblichen Standards befolgt. In solch einem Fall, wird das Lesegerät beim Auslesen der Daten diesen Bereich einfach ignorieren, d.h. überspringen. Gegebenenfalls muss der zu ignorierende Bereich je nach Dateisystem oder Leseprotokoll speziell als solcher markiert werden.

Die Größe des Teilbereichs kann dabei ziemlich beliebig innerhalb der Grenzen des Datenbereichs gewählt werden, es ist aber zu beachten, dass durch diesen Teilbereich ein entsprechender Teil der Speicherkapazität nicht mehr für Daten zur Verfügung steht. Dies ist aber oft kein Nachteil, da der restliche Speicherplatz für viele Anwendungen mehr als ausreichend ist.

In diesen Teilbereich werden Informationen eingebracht die vom Benutzer mit bloßem Auge auf dem Datenträger ggf. nach Aufbringen der Reflexionsbeschichtung, z.b. mittels Aluminium, erkennbar sind, wie z.b. Text und/oder Grafiken, die zur Identifizierung des Datenträgers dienlich sind, z.b. den Inhalt des Mediums, wie Interpret und Titel im Falle einer Audio-CD (CD-DA), usw.

In WO 2006/014885 wird ein Verfahren zum Kopierschutz von optischen Medien beschrieben in dem ein Bereich als von einem Standard-Lesegerät zu ignorieren gekennzeichnet wird und in diesen Bereich unlesbare Daten geschrieben werden. Der Bereich mit den unlesbaren Daten bewirkt, dass beim Versuch den Datenträger zu Kopieren der Kopiervorgang abbricht. Dabei kann dieser Bereich je nach Größe mit dem bloßen Auge unsichtbar oder sichtbar sein, z.b. in Form von einem leicht anders aussehenden feinen Rings innerhalb des Datenbereichs.

Ob sichtbar oder nicht, dient dieser unlesbare Bereich jedoch nur dem Kopierschutz und erlaubt dem Benutzer keinerlei Rückschlüsse auf den Inhalt des optischen Datenträgers. Das Einbringen von visuell erkennbaren Informationen ist in keiner Weise, weder explizit noch implizit erwähnt.

Allgemein haben optische Datenträger im Sinne der Erfindung die Form einer Scheibe, obwohl auch andere Formen möglich sind, mit zwei Seiten, wobei die sogenannte Datenseite Daten enthält die mittels eines Standard-Lesegeräts, z.b. eines CD- und/oder DVD-Players lesbar sind. Die der Datenseite abgewandte Nicht-Datenseite wird üblicherweise zur Identifizierung, d.h. zur Beschriftung benutzt wodurch der Benutzer den Datenträger, bzw. dessen Inhalt identifizieren kann.

Mit anderen Worten ist bei einseitigen Medien die Datenseite generell für das Lesegerät und die Nicht-Datenseite für den Benutzer reserviert und beide Seiten werden in den bekannten Verfahren durch eigene Herstellungsschritte erzeugt.

Durch das erfindungsgemäße Verfahren sind die Informationen zur Identifizierung jedoch von der Datenseite her durch den Benutzer des Datenträgers visuell erkennbar und, sofern bei einem einseitigen Medium eine durchsichtige Lackschicht auf der Nicht-Datenseite verwendet wird, auch von der Nicht-Datenseite als Spiegelbild (siehe Fig.1 und 2), wobei auf Wunsch die eigentlich seitenverkehrte Darstellung zur Datenseite oder zur Nicht-Datenseite gerichtet werden kann.

Das Einbringen der visuell erkennbaren Informationen kann während dem sogenannten Premastering und/oder während dem Mastering erfolgen. In einer bevorzugten Ausgestaltung wird diese visuelle Erkennbarkeit durch ein mikroskopisches Relief das entweder durchgehend oder bevorzugt durch eine gezielte Anordnung von einer Vielzahl mikroskopisch kleiner Vertiefungen ist erreicht. Dabei kann z.b. die Anordnung einer Vielzahl von Pits den Text und/oder die Grafik selbst darstellen oder aber die Restfläche innerhalb des Teilsbereichs, d.h. als Positiv- oder als Negativdarstellung.

Der Vorteil dieser letztgenannten Ausgestaltung ist, dass man sie unter Benutzung herkömmlicher (professioneller) Geräte erzeugen kann und so keine Zusatzkosten entstehen.

Ein Teilbereich im Sinne der Erfindung ist ein Teil der für die eigentlichen Daten vorgesehenen Fläche, wobei dieser Teilbereich üblicherweise eine Ringfläche ist. Die Form dieses Teilbereichs ist aber systemabhängig und sofern ein bestimmtes Leseprotokoll es erlaubt, d.h. sofern ein Standard-Lesegerät einen bestimmten Bereich ignorieren kann, kann die Form des Teilbereichs auch anders gestaltet sein, z.b. eine Teilkreis- oder Sektorfläche, z.b. eine Viertelkreisfläche.

Wie oben erwähnt wird das Verfahren während dem Premastering und/oder während dem Mastering des Datenträgers verwendet, bevorzugt zur Herstellung eines sogenannten Glasmasters. Bevorzugt ist der so hergestellte optische Datenträger eine CD, DVD, HD-DVD, BR-Disc (Blu-Ray Disc), usw.

Wie oben erwähnt erlaubt das in WO 2006/014885 beschriebene Verfahren zwar den Kopierschutz eines optischen Datenträgers, jedoch ist es für den Laien weder ersichtlich ob dieser Datenträger kopiergeschützt ist, noch ob es sich um ein Original handelt.

In einer anderen Ausgestaltung betrifft die Erfindung deshalb ein Verfahren zur kombinierten Authentifizierung eines optischen Datenträgers durch den Benutzer und Kopierschutz des Datenträgers, wobei das Verfahren folgende Schritte umfasst:
Einfügen innerhalb des mindestens einen Datenbereichs mindestens eines Teilbereichs der keine Daten enthält und von Standard-Lesegeräten ignoriert wird,
Einbringen innerhalb dieses mindestens einen Teilbereichs von durch einen Benutzer des Datenträgers visuell erkennbaren Informationen zur Authentifizierung des Datenträgers durch den Benutzer,
wodurch bei einem Kopiervorgang des Datenträgers, dieser beim Erreichen des Teilbereichs abbricht.

Durch ein solches Verfahren ist es einerseits möglich eine Eins-zu-eins-Kopie mittels herkömmlicher Schreib-Lese-Geräte zu verhindern da der Kopiervorgang bei einer Eins-zu-eins-Kopie den Teilbereich nicht ignoriert, d.h. beim Erreichen der für das Lesegerät unlesbaren Daten bricht der Vorgang ab. Andererseits, erlaubt dieses Verfahren optische Medien herzustellen, welche vom Laien leicht von einer Kopie ohne diesen Teilbereich unterschieden werden kann. Tatsächlich ist es mit einfachen Mitteln, d.h. mit handelsüblichen Schreib-Lesegeräten, sogenannten "Brennern" nicht möglich einen solchen Teilbereich nachzubilden.

Eine Kopie mittels professioneller Replikationsgeräte, so wie die in diesem Verfahren nutzbaren Geräte, ist natürlich möglich, bedeutet aber auch einen höheren finanziellen und technischen Aufwand für den Kopierer.

Dies ist umso wünschenswerter, da der Käufer eines optischen Datenträgers sich einigermaßen sicher sein will, dass er ein Original-Produkt erstanden hat und nicht eine eventuell sogar mit sogenannter "Malware" verseuchte, billige Kopie.

Mit dem kombinierten Verfahren sind die Informationen zur Authentifizierung, z.b. der Name des Herstellers, usw., von der Datenseite her durch den Benutzer des Datenträgers visuell erkennbar.

Ein weiterer Vorteil ist, dass die Nicht-Datenseite wie bei herkömmlichen Datenträgern in einem zusätzlichen Verfahrensschritt nach der Reflexionsbeschichtung und ggf. der Lackbeschichtung bedruckt werden kann, ohne diesen in irgendeiner weise zu beeinflussen. Es werden demnach dem Hersteller keine Grenzen in bezug auf Gestaltung der Nicht-Datenseite gesetzt, obwohl der Datenträger für den Laien gut sicht- und leicht erkennbar als authentisch markiert wurde.

Weiter Ausgestaltungen des kombinierten Verfahrens zur Authentifizierung und zum Kopierschutz ergeben sich aus den oben beschriebenen Aspekten in bezug auf das Beschriftungsverfahren.

Eine weitere Auslegung der Erfindung betrifft einen optischen Datenträger umfassend mindestens eine Datenschicht mit mindestens einem Datenbereich, wobei die Daten von der Datenseite mittels eines Standard-Lesegeräts lesbar sind und wobei sich innerhalb des mindestens einen Datenbereichs, mindestens ein Teilbereich befindet der Informationen enthält, die von der Datenseite her durch einen Benutzer des Datenträgers visuell erkennbar sind.

Obwohl die Informationen von der Datenseite vom Benutzer visuell erkennbar sind, kann es sich hier wie schon erwähnt um das Spiegelbild der eigentlichen Informationen handeln je nach Orientierung der Informationen bei der Herstellung.

Im Falle einseitiger Medien können die Informationen auch von der der Datenseite abgewandten Nicht-Datenseite durch den Benutzer des Datenträgers visuell erkennbar sein.

Obwohl prinzipiell nicht ausgeschlossen, werden die erfindungsgemäßen optischen Medien bevorzugt ohne weitere Beschriftung in Form eines Drucks hergestellt.

In einer weiteren Ausgestaltung betrifft die Erfindung einen optischen Datenträger umfassend mindestens eine Datenschicht mit mindestens einem Datenbereich, innerhalb des mindestens einen Datenbereichs, mindestens ein Teilbereich der keine Daten enthält und von Standard-Lesegeräten ignoriert wird, innerhalb dieses mindestens einen Teilbereichs, durch den Benutzer des Datenträgers visuell erkennbare Informationen.

### Kurze Beschreibung der Figuren

Im Folgenden wird nun eine Ausgestaltung der Erfindung anhand der beiliegenden Figuren beschrieben. Diese zeigen:
Fig. 1: eine Draufsicht auf die Unterseite (Datenseite) eines optischen Datenträgers 1, z.b. eine CD-ROM, wobei ein Teilbereich 6 innerhalb des Datenbereichs 5 visuell erkennbare Informationen in Form von Text und Grafiken enthält.
Fig. 2: eine Draufsicht auf die Oberseite (Nicht-Datenseite) des in Fig. 1 gezeigten optischen Datenträgers 1, z.b. eine CD-ROM, wobei die in Fig. 1 dargestellte Text und Grafiken als Spiegelbild visuell erkennbar sind.

Weitere Einzelheiten und Vorteile der Erfindung können der nachfolgenden ausführlichen Beschreibung möglicher Ausführungsformen der Erfindung anhand der beiliegenden Figuren entnommen werden.

### Beschreibung einer Ausgestaltung der Erfindung

In einer einfachen Form besteht ein optischer Datenträger 1, wie z.b. eine CD-ROM, aus einem Kunststoffträgermaterial mit Aluminiumbeschichtung. Allgemein handelt es sich um eine Scheibe mit einem Zentrierloch umgeben von einem nicht metallisierten transparenten Ring 3. Außerhalb dies Rings befindet sich der sogenannte BCA-Bereich welcher üblicherweise eine Produktions- oder Seriennummer o.ä. enthält die erst nach der Herstellung eingefügt wird.

Die digitalen Daten werden auf einer spiralförmigen Spur innerhalb des Datenbereichs 5 aufgebracht. Es werden stellenweise mikroskopisch kleine Vertiefungen in die Beschichtung gepresst, sogenannte Pits (nicht dargestellt). Beim Lesen tastet ein schwacher Laserstrahl die gespeicherten Daten ab, wobei die Übergänge von Land zu Pit, und umgekehrt, das Licht nicht reflektieren, sondern streuen.

Generell beginnt die industrielle Herstellung eines optischen Datenträgers, wie einer CD-ROM, mit dem Premastering. Dabei werden die auf dem Datenträger zu speichernden Daten zusammengestellt, sowie weitere Daten zur Fehlererkennung, usw. berechnet und eingefügt.

Beim nächsten Produktionsschritt, dem Mastering, werden mit Hilfe eines starken Laserstrahls die Daten vom Master auf eine photoresistente Schicht übertragen, diese wird anschließend ausgewaschen und versilbert oder vernickelt, wodurch ein Positiv einer CD-ROM, ein sogenannter Glasmaster entsteht.

Beim erfindungsgemäßen Verfahren, wird ein Teilbereich 6 mit visuell erkennbaren Informationen, wie Text und Grafiken, innerhalb des Datenbereichs 5 während dem Premastering oder Mastering eingebracht. Je nach gewählter Orientierung dieser Informationen erscheint das Abbild seitenverkehrt oder nicht wenn der Benutzer den Datenträger von der Datenseite betrachtet.

Die eigentliche CD-ROM-Herstellung (Pressung) erfolgt in einem Spritzgussverfahren (genau: Spritzprägen). Das Ausgangsmaterial, z.b. flüssiges Polycarbonat, wird in ein Werkzeug gepresst auf dem sich auf der einen Seite der sogenannte Stamper (Datennegativ) befindet, anschließend mit Aluminium beschichtet und mit einer Lackschicht versiegelt.

Bei mehrlagigen Datenträgern oder gar mehrseitigen Datenträgern wird das hier beschriebene Verfahren entsprechend ausgeführt, wobei mehr als ein Teilbereich in mehr als einem Datenbereich beschriftet werden kann, z.b. bei doppelseitigen Medien eine Lage auf jeder Seite.

**Tabelle 1: Zeichenerklärung**

| Ref. | Beschreibung |
|---|---|
| 1 | Optischer Datenträger |
| 2 | Zentrierloch |
| 3 | Transparenter Ring |
| 4 | BCA-Bereich |
| 5 | Datenbereich |
| 6 | Teilbereich innerhalb des Datenbereichs |

## Patentansprüche

1. Verfahren zur Beschriftung eines optischen Datenträgers mit mindestens einem Datenbereich, das folgende Schritte umfasst:
Einfügen innerhalb des mindestens einen Datenbereichs mindestens eines Teilbereichs der keine Daten enthält und von Standard-Lesegeräten ignoriert wird,
Einbringen innerhalb dieses mindestens einen Teilbereichs von durch einen Benutzer des Datenträgers visuell erkennbaren Informationen.

2. Verfahren nach Anspruch 1, wobei die Daten von der Datenseite mittels eines Standard-Lesegeräts lesbar sind und die Informationen von der Datenseite her durch den Benutzer des Datenträgers visuell erkennbar sind.

3. Verfahren nach Anspruch 1 oder 2, wobei die visuell erkennbaren Informationen durch Anordnung von einer Vielzahl mikroskopisch kleiner Vertiefungen erreicht wird.

4. Verfahren nach irgend einem der vorhergehenden Ansprüche, wobei die visuell erkennbaren Informationen Text und/oder Grafiken enthalten.

5. Verfahren nach irgend einem der vorhergehenden Ansprüche, wobei der Teilbereich eine Ringfläche ist.

6. Verfahren nach irgend einem der vorhergehenden Ansprüche, zur Herstellung eines Glasmasters.

7. Verfahren nach irgend einem der vorhergehenden Ansprüche, ohne weiteren Beschriftungsschritt in Form eines Drucks.

8. Verfahren nach irgend einem der Ansprüche 1 bis 7, wobei die Informationen auch von der der Datenseite abgewandten Nicht-Datenseite her durch den Benutzer des Datenträgers visuell erkennbar sind.

9. Verfahren nach irgend einem der Ansprüche 1 bis 7, wobei der optische Datenträger ein beidseitig beschriebener optischer Datenträger ist.

10. Verfahren nach irgend einem der vorhergehenden Ansprüche, wobei der optische Datenträger eine CD, eine DVD, eine HD-DVD oder eine BR-Disc ist.

11. Verfahren zur kombinierten Authentifizierung eines optischen Datenträgers durch den Benutzer und Kopierschutz des Datenträgers, das folgende Schritte umfasst:
Einfügen innerhalb des mindestens einen Datenbereichs mindestens eines Teilbereichs der keine Daten enthält und von Standard-Lesegeräten ignoriert wird,
Einbringen innerhalb dieses mindestens einen Teilbereichs von durch einen Benutzer des Datenträgers visuell erkennbaren Informationen zur Authentifizierung des Datenträgers durch den Benutzer,
wodurch bei einem Kopiervorgang des Datenträgers, dieser beim Erreichen des Teilbereichs abbricht.

12. Verfahren nach Anspruch 11, wobei die Daten von der Datenseite mittels eines Standard-Lesegeräts lesbar sind und die Informationen von der Datenseite her durch den Benutzer des Datenträgers visuell erkennbar sind.

13. Verfahren nach Anspruch 11 oder 12, wobei die visuell erkennbaren Informationen durch Anordnung von einer Vielzahl mikroskopisch kleiner Vertiefungen erreicht wird.

14. Verfahren nach irgend einem der Ansprüche 11 bis 13, wobei die visuell erkennbaren Informationen Text und/oder Grafiken enthalten.

15. Verfahren nach irgend einem der Ansprüche 11 bis 14, wobei der Teilbereich eine Ringfläche ist.

16. Verfahren nach irgend einem der Ansprüche 11 bis 15, zur Herstellung eines Glasmasters.

17. Verfahren nach irgend einem der Ansprüche 11 bis 16, wobei der optische Datenträger eine CD, DVD, eine HD-DVD oder eine BR-Disc ist.

18. Optischer Datenträger umfassend mindestens eine Datenschicht mit mindestens einem Datenbereich,
wobei die Daten von der Datenseite mittels eines Standard-Lesegeräts lesbar sind, und
wobei sich innerhalb des mindestens einen Datenbereichs, mindestens ein Teilbereich befindet der Informationen enthält, die von der Datenseite her durch einen Benutzer des Datenträgers visuell erkennbar sind.

19. Optischer Datenträger nach Anspruch 18, bei dem die Informationen auch von der der Datenseite abgewandten Nicht-Datenseite durch den Benutzer des Datenträgers visuell erkennbar sind.

20. Optischer Datenträger nach Anspruch 18 oder 19, ohne weitere Beschriftung in Form eines Drucks.

21. Optischer Datenträger nach irgendeinem der Ansprüche 18 bis 20, wobei der optische Datenträger eine CD, DVD, eine HD-DVD oder eine BR-Disc ist.
